# EUROPEAN PATENT APPLICATION

(11) **EP 4 067 571 A1**
(43) Date of publication of application: **05.10.2022**
(21) Application number: 21166391.9
(22) Date of filing: 31.03.2021
(51) Int. Cl.: D21H 27/10, D21H 19/06, B29D 22/00, B65D 1/02, B65D 23/08, D21J 3/10

(54) **A METHOD FOR COATING A HOLLOW CONTAINER COMPRISING MOLDED PULP**

(71) Applicant: BillerudKorsnäs AB, 169 27 Solna (SE)
(72) Inventor: SANDBERG, Lars, 663 41 Hammarö (SE); BOISSARD, Yselaure, 703 62 Örebro (SE); YAMADA, Shoko, 215 45 Vintrie (SE)
(74) Representative: Kransell & Wennborg KB

(57) **Abstract**

The present disclosure generally relates to a method for providing a barrier coating on a hollow container (100) comprising molded pulp. The method comprises providing a polymeric powder coating onto the interior surface (105a) and at least a portion of the exterior surface of the container (100) prior to curing and/or melting the powder coatings. The present disclosure also relates to a hollow container (100) formed by the method.

## Description

### TECHNICAL FIELD

The present disclosure generally relates to a method for providing a barrier coating on a hollow container comprising molded pulp. The method comprises providing a polymeric powder coating onto the interior surface and at least a portion of the exterior surface of the container prior to curing and/or melting the powder coatings. The present disclosure also relates to a hollow container formed by the method.

### BACKGROUND

Plastic containers, packaging trays and bottles are extensively used for storing food products, such as flowable food and beverages. Plastic articles can be easily molded, stretched, and produced at a relatively low cost. However, the use of plastics is associated with environmental concerns. In order to relieve the environmental burden, attempts have been made to replace plastic containers and bottles with renewable materials, such as molded pulp.

Shaped pulp products, such as paper containers and bottles may be formed by feeding pulp, e.g. paper pulp into a split mold and subsequently dewatering the pulp with heat and/or pressure, as disclosed in e.g. WO16055072.

Although paper is regarded as a sustainable packaging material, paper has a number of drawbacks compared to traditional plastics. Paper is generally more permeable to gases, grease, and moisture. Long-time exposure to moisture, as is typically the case during storage of beverages, may lead to deterioration of the inner walls of the paper container.

To that end, the inner walls of the paper container may be coated with a barrier coating to protect the container from deteriorating due to liquid and moist exposure. Barrier coatings may also be used to control the humidity, sealing properties, aroma etc. of the container.

Barrier coatings typically comprise polymers, such as polyolefin polymers, and may be applied to the inner container walls in various ways, e.g. by extrusion coating or applied as liquid coatings.

In order to reduce the emission of volatile organic compounds (VOC) and coating waste, powder coatings have gained attention in recent years.

A powder coating is a dry, finely divided solid material that is commonly used on electrically conductive metal substrates. The deposition of a powder coating is typically achieved by electrostatic forces. For example, the powder may be charged by corona discharge and then sprayed onto a grounded substrate. Accordingly, a powder layer is applied to the substrate, which is subsequently heated such that the powder melts and forms a continuous film on the substrate.

The deposition of a powder coating onto a molded pulp substrate is, however, challenging due to the inherent non-conductive properties of such a substrate. The coating is not assisted by electrostatic attraction, which may result in poor adhesion of the powder to the substrate, and in an uneven powder deposition.

The complexity of depositing a powder coating increases if the product to be coated is shaped as a hollow container, e.g. a bottle. In such cases, it may also be desirable to coat the upper exterior part of the container, i.e. the portion surrounding the opening of the container. This portion of the product is typically subject to repeated exposure to moist and liquid during drinking or pouring from the container.

Accordingly, there is a need to provide a simplified method for applying a powder coating to a molded pulp container used for storage of flowable food or beverages, wherein the surfaces of the container being predominantly exposed to moist and liquid are provided with a protective and durable barrier coating.

### SUMMARY

In view of the above, there is a need for an improved and simplified method for the provision of a powder coating on a hollow container comprising molded pulp, which method results in a liquid and moist barrier coating that protects the most exposed parts of the container.

According to a first aspect, there is provided a method for providing a barrier coating on a hollow container comprising molded pulp, the method comprising:
a) providing a hollow container comprising molded pulp, wherein the hollow container comprises a main portion and an upper portion; the hollow container extending along a longitudinal center line, wherein the longitudinal extension of the upper portion corresponds to 5-30% of the maximum longitudinal extension of the hollow container, and wherein the longitudinal extension of the main portion corresponds to 70-95% of the maximum longitudinal extension of the hollow container, wherein the hollow container comprises a bottom surface and sidewalls extending from the bottom surface to an opening of the hollow container; the sidewalls and the bottom surface defining an exterior surface and an interior surface of the hollow container,
b) depositing a polymeric powder onto the interior surface of the hollow container by means of a spraying device capable of charging the polymeric powder prior to or during deposition of the powder, wherein at least the main portion of the hollow container is grounded during the polymeric powder deposition,
c) depositing a polymeric powder onto the exterior surface of at least a portion of the upper portion of the hollow container by means of the spraying device,
d) treating the hollow container with heat or irradiation under conditions that melt and/or cure the polymeric powder after the steps b) and c)

The present disclosure is based on the realization that both the interior surface and a portion of the exterior surface of the hollow container can be coated prior to treatment with heat or irradiation; i.e. prior to formation of a continuous barrier coating. Accordingly, the most "vulnerable" parts of the container; i.e. the parts predominantly exposed to moist and liquid during use, can be coated in one step, and only one heating or irradiation step is required in the method.

Depositing a powder coating onto these portions of a hollow container is associated with complex processability. First, because the molded pulp substrate as such is non-conductive. Second, because the coating of both the interior container surface and the exterior surface of the upper portion can typically not be performed in one step. In most applications, it is generally required to first provide an interior powder coating, thereafter melt and/or cure the powder coating, and in a separate step, provide an exterior coating, and subsequently melt and/or cure the exterior coating in a second step.

A hollow container formed according to the method of the present disclosure only requires one step of heat or irradiation treatment after the interior surface and the exterior surface of a portion of the upper portion have been coated. Accordingly, significant savings in time and costs, and a more simplified method is provided.

The polymeric powder particles are electrically charged by means of the spraying device, and due to its negative (or positive) electric charge, the powder will seek a grounded surface which has a more positive (or negative) charge. Accordingly, the powder particles will adhere to the container surface. During the subsequent heating or irradiation step, the applied polymeric powder coating will melt and cure such that an even and durable protective barrier coating is provided.

The inventors have found that the moisture content and relative humidity of the hollow container largely impacts the ability of the hollow container to be coated on both the interior surface and the exterior surface of at least the upper portion. The inventors have found that a moisture content corresponding to conditioning at an ambient relative humidity of from 60 to 100%, preferably from 75 to 95% during the steps of polymeric powder deposition; i.e. during steps b) and c) of the method, allows for a homogenous and even coating to be provided prior to the step of curing or melting the powder coating.

A moisture content in the above ranges allows for at least a portion of the upper portion to be coated without connection to a grounded electrically conductive surface. Typically, since pulp is inherently non-conductive, the presence of a grounded electrically conductive surface is required for the powder to adhere to the pulp container. However, with a moisture content in the above mentioned range, this is not required.

The moisture content of the hollow container may be selectively steered and controlled depending on the size of the container and depending on the use of the container. For example, in some situations, it may be desired to coat a large proportion of the upper portion of the container, whereas in others, only a smaller proportion may be desired. By tailoring the moisture content and the relative humidity level, situation-specific adjustments may be accomplished.

Furthermore, the moisture content in the above mentioned range allows for the deposition of polymeric powder on both the interior and exterior surface of the container walls to be accomplished simultaneously or in consecutive order. Accordingly, no melting and/or curing step is required between steps b) and c) of the method.

In embodiments, the polymeric powder deposition steps b) and c) are performed simultaneously.

This may be accomplished by arranging the spraying device; i.e. the tip of the spraying device, in proximity of the opening of the hollow container and along the longitudinal center line of the container. This way a flow of charged polymer powder particles is directed towards the interior surface of the container walls, while also at least partly covering the exterior surface of the upper portion of the container.

In alternative embodiments, the polymeric powder deposition step c) is performed by arranging the spraying device at a distance, d1, of from 50 mm to 250 mm, preferably of from 70 mm to 150 mm from the opening of the hollow container.

The tip of the spraying device is typically arranged along the longitudinal center line such that the flow of polymeric powder particles can cover the entire surface of the upper portion, if desired.

Accordingly, the spraying device may in the first polymeric powder deposition step b), either be inserted into the opening, or arranged in proximity of the opening during spraying. The charged polymeric powder particles will be electrically attracted to, and allowed to adhere to the interior surface of the hollow container.

Subsequently, the spraying device is removed from the container opening and arranged at the distance, d1, from the opening of the container. The nozzle or tip of the spraying device is typically arranged vertically from the opening of the container; i.e. along the longitudinal center line of the container. This is to secure coverage of the powder on a large surface of the upper portion of the hollow container.

In embodiments, the polymeric powder deposition step b) is carried out in a molding device comprising an electrically conductive material, preferably a metal; the molding device comprising at least a first and a second removable portion, wherein the first removable portion is configured to enclose the upper portion of the hollow container and wherein the second removable portion is configured to enclose the main portion of the hollow container.

The spraying device imparts a charged field such that the polymeric powder particles are charged and electrically attracted to the grounded and electrically conductive surfaces of the hollow container. During the polymeric powder deposition step b), the first and the second removable portions of the molding device may be arranged to enclose both the main and the upper portion of the hollow container. Accordingly, the entire interior surface of the container is electrically charged during polymeric powder deposition of the interior part of the container. A flow of electrically charged polymeric powder particles is directed to the interior surface of the hollow container and will adhere thereto. By securing efficient grounding an enclosing both the main portion and the upper portion of the container during the polymeric powder deposition step b), the electrical charge carried by the grounded surface will be spread across the entire area of the interior surface. Accordingly, an even powder coating will be applied across the interior surface of the hollow container.

In embodiments, e.g. if the moisture content is higher; i.e. corresponding to conditioning at an ambient relative humidity of above 60%, e.g. above 75%, the polymeric powder deposition step b) may be carried out with only the second removable portion present.

Accordingly, in step b), a spraying device, such as a spray gun, may be inserted into the opening of the hollow container (or in proximity of the opening) in order to coat the interior surface of the container.

In embodiments, the first removable portion is removed from the molding device during the polymeric powder deposition step c).

Subsequent to the polymeric powder deposition step b), the first removable portion (configured to enclose the upper portion of the container), is removed, and the spraying device is removed from the interior or the opening of the container and arranged at a distance from the container. Spraying of at least a portion of the upper portion of the container can then be accomplished. During this step (step c), the upper portion of the container is not connected to a grounded electrically conductive surface.

Accordingly, a simplified method for providing both an interior barrier coating and an exterior barrier coating is provided. The method only requires one or two spray sequences and only one heat or irradiation treatment following the spray sequence(s).

Furthermore, this is beneficial since only the exterior surface of the upper portion will be coated. Preferably, the exterior surface of the main portion of the container does not comprise any barrier coating. This is to yield a more paper like and "raw feel" on the main part of the container.

In preferred embodiments, the hollow container is a bottle, wherein the upper portion comprises a shoulder portion and a neck portion, wherein the neck portion has a smaller cross-sectional area than the main portion and is configured to circumferent at least the opening of the bottle and wherein the shoulder portion is arranged to taper between the main portion and the neck portion.

In embodiments, at least the neck portion of the upper portion of the bottle is coated in the polymeric powder deposition step c).

In the case of a bottle, the neck portion is preferably coated since this portion is exposed to moist and liquid when a person drinks from the bottle or when flowable food or liquid is poured from the bottle.

In embodiments, the entire upper portion of the hollow container is coated in the polymeric powder deposition step c).

In some situations, it may be desirable to cover the entire upper portion of the bottle. In such embodiments, the moisture content of the hollow container corresponds to conditioning at an ambient relative humidity of above 70%.

In the last step d) of the method of the present disclosure, the hollow container is treated with heat or irradiation under conditions that melt and/or cure the polymeric powder after the steps b) and c).

In embodiments, the curing step d) is performed by heating the hollow container at a temperature of from 150°C to 200°C, preferably from 170°C to 190°C for 5 to 30 minutes, preferably from 8 to 15 minutes.

Accordingly, a uniform barrier coating is provided on the interior surface and exterior surface of the upper portion of the container.

In embodiments, the thickness of the barrier coating formed in the coating step b) and/or c) is in the range of from 5 to 200 µm, e.g. from 20 to 100 µm.

In embodiments, the molded pulp is formed from a mixture of a first and a second pulp, wherein
- the first pulp comprises 65-90 %, such as 70-84 %, by dry weight of a first pulp having a Schopper- Riegler (SR) number according to ISO 5267-1 of below 48, preferably below 40, more preferably below 30; and
- the second pulp comprises 10-35 %, such as 16-30 %, by dry weight of a second pulp having a Schopper- Riegler (SR) number according to ISO 5267-1 of 60-90, preferably 70-90, more preferably 77-90.

Such a pulp mixture allows for the strength of the container walls to be enhanced, and furthermore allows for a quick dewatering of the pulp during molding.

According to another aspect of the present disclosure, there is provided a hollow container formed by the method described hereinbefore.

The hollow container comprises a main portion and an upper portion; the hollow container extending along a longitudinal center line, wherein the longitudinal extension of the upper portion corresponds to 5-30% of the maximum longitudinal extension of the hollow container, and wherein the longitudinal extension of the main portion corresponds to 70-95% of the maximum longitudinal extension of the hollow container, wherein the hollow container comprises a bottom surface and sidewalls extending from the bottom surface to an opening of the hollow container; the sidewalls and the bottom surface defining an exterior surface and an interior surface of the hollow container, wherein the hollow container comprises a barrier coating comprising polymeric powder on the interior surface of the hollow container and on the exterior surface of at least a portion of the upper portion of the hollow container.

In embodiments, the hollow container is a bottle. In such embodiments, the upper portion typically comprises a shoulder portion and a neck portion, wherein the neck portion has a smaller cross-sectional area than the main portion and is configured to circumferent at least the opening of the bottle, and wherein the shoulder portion is arranged to taper between the main portion and the neck portion, wherein the bottle comprises a barrier coating comprising polymeric powder on the interior surface of the bottle and on at least the exterior surface of the neck portion of the bottle.

In embodiments, the exterior surface of the main portion of the bottle does not comprise any barrier coating.

This is to achieve a "raw" paper like appearance on the exterior surface of the main portion of the bottle. Accordingly, only the portions of the bottle that are exposed to moist and liquid are provided with a barrier coating.

Further features of, and advantages with, the present disclosure will become apparent when studying the appended claims and the following description. The skilled addressee realizes that different features of the present disclosure may be combined to create embodiments other than those described in the following, without departing from the scope of the present disclosure.

### BRIEF DESCRIPTION OF DRAWINGS

The various aspects of the present disclosure, including its particular features and advantages, will be readily understood from the following detailed description and the accompanying drawings, in which:
Figure 1 a schematically illustrates the step of providing an interior barrier coating according to an exemplary embodiment of the method of the present disclosure.
Figure 1b schematically illustrates the step of providing an exterior barrier coating on the upper portion of a container according to an exemplary embodiment of the method of the present disclosure.
Figure 2 schematically illustrates a bottle comprising molded pulp formed according to the method shown in figures 1a-b.
Figure 3a illustrates a bottle comprising molded pulp that has been coated according to the method of the present disclosure, wherein the bottle has been conditioned at a relative humidity of 90%.
Figure 3b illustrates the bottle of figure 3a after heat treatment.

### DETAILED DESCRIPTION

The present disclosure will now be described more fully hereinafter with reference to the accompanying drawings, in which currently preferred embodiments of the present disclosure are shown. The present disclosure may, however, be embodied in many different forms and should not be construed as limited to the embodiments set forth herein; rather, these embodiments are provided for thoroughness and completeness, and fully convey the scope of the present disclosure to the skilled person. Like reference characters refer to like elements throughout.

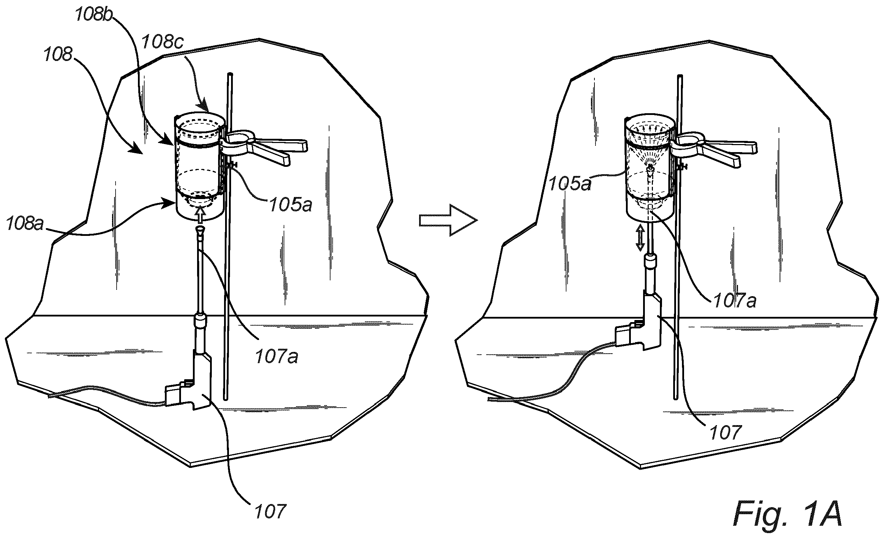

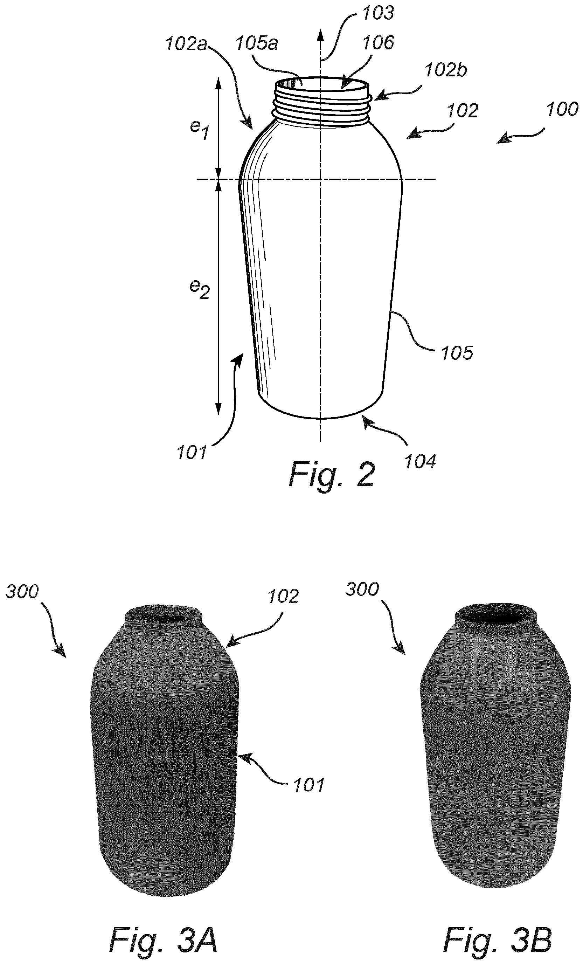

In figures 1a-b, a method for providing a barrier coating on a hollow container comprising molded pulp is conceptually illustrated. Figure 2 illustrates a hollow container, i.e. a bottle, formed by the method of the present disclosure

The method of the present disclosure comprises:
a) providing a hollow container 100 comprising molded pulp, wherein the hollow container comprises a main portion 101 and an upper portion 102; the hollow container extending along a longitudinal center line 103, wherein the longitudinal extension of the upper portion 102 corresponds to 5-30% of the maximum longitudinal extension of the hollow container and wherein the longitudinal extension of the main portion 101 corresponds to 70-95% of the maximum longitudinal extension of the hollow container, and wherein the hollow container comprises a bottom surface 104 and sidewalls 105 extending from the bottom surface to an opening of the hollow container; the sidewalls 105 and the bottom surface 104 defining an exterior surface and an interior surface 105a of the hollow container,
b) depositing a polymeric powder onto the interior surface 105a of the hollow container 100 by means of a spraying device 107 capable of charging the polymeric powder prior to or during deposition of the polymeric powder, wherein at least the main portion 101 of the hollow container 100 is grounded during the polymeric powder deposition,
c) depositing a polymeric powder onto the exterior surface of at least a portion of the upper portion 102 of the hollow container 100 by means of the spraying device 107,
d) treating the hollow container with heat or irradiation under conditions that melt and/or cure the polymeric powder.

As used herein, the term "hollow container" means any kind of container, such as a jar, tray, cup, bowl or a bottle. In the embodiments illustrated in the figures, the hollow container is a bottle. In embodiments, the hollow container has a rotational symmetry about the longitudinal center line. For example, the shape of the hollow container is generally cylindrical.

As used herein, the term "molded pulp" means a pulp or a pulp mixture that is shaped, pressed and dried. The molded pulp is may e.g. be made from paper or wood fibers. For example, the pulp may be a fibrous material produced by mechanically or chemically reducing woody plants to their component parts and then suspended in a fluid, e.g. water.

The "interior surface" of the hollow container is defined by the sidewalls and the bottom surface of the container. The interior surface may also be referred to as the interior walls.

The "exterior surface" is defined by the sidewalls and the bottom surface of the container. The exterior surface may also be referred to as the exterior walls.

The polymeric powder used for coating of the hollow container is not limited. For example, the powder may comprise a thermoplastic polymer selected from polyolefins, e.g. polyethylene or polypropylene and copolymers thereof, polyamides and polyesters, and copolymers thereof. The polymeric powder may also comprise water soluble synthetic polymers, such as polyvinyl alcohol or polysaccharides, such as cellulose. The powder particles typically have an average size in the range of 1 to 200 µm, e.g. from 5 to 100 µm, e.g. from 10 to 50 µm. These ranges allow for an even coating, and furthermore allow for charging of the polymeric powder particles to be accomplished by the spraying device.

The longitudinal extension of the upper portion 102 corresponds to 5-30%, preferably 10-20% of the maximum longitudinal extension of the hollow container. The longitudinal extension of the upper portion is denoted e1 in figure 2.

The longitudinal extension of the main portion 101 corresponds to 70-95%, preferably 80-90% of the maximum longitudinal extension of the hollow container. The longitudinal extension of the main portion 101 is denoted e2 in figure 2.

A hollow container comprising molded pulp may be provided by means known to the skilled person. For example, the hollow container may be provided by depositing a pulp mixture into a mold, e.g. a split-mold, activating a pressing tool, e.g. an impermeable balloon within the interior cavity of the mold such that the pulp assumes the shape of the balloon, thereby forming the interior and exterior walls of the hollow container. The molded pulp may then be drained such that excessive water is removed. A process for providing a hollow container is e.g. described in WO16055073. Other means for providing a hollow container comprising molded pulp are also conceivable.

The hollow container may then be removed from the split-mold, and is typically further conditioned prior to applying a powder coating onto the interior and exterior container walls.

In alternative embodiments, the step of providing a hollow container comprising molded pulp is achieved in the same molding device used for providing the interior and exterior coatings in steps b) and c) of the method.

As illustrated in figures 1a-b, the spraying device used for polymeric powder coating is a spray gun. The method is by no means limited to the use of a spray gun, but any spraying device capable of charging the powder prior to or during deposition of the powder can be used. The powder is typically charged by corona charging; i.e. the powder particles pass through a charged corona field at the tip or nozzle of the spray gun, which applies a negative (or positive) charge to each of the polymeric powder particles. This allows for the powder particles to strongly adhere to the grounded and electrically conductive parts of the hollow container and stick thereto.

As illustrated in figures 1a-b, the spraying device 107 comprises a nozzle 107a that is inserted into the hollow container; i.e. into the bottle.

In the method illustrated in figures 1a-b, the polymeric powder deposition step b) is carried out in a molding device 108 comprising an electrically conductive material, preferably a metal; the molding device 108 comprising at least a first 108a and a second 108b removable portion, wherein the first removable portion 108a is configured to enclose the upper portion 102 of the container and wherein at least the second removable portion 108b is configured to enclose the main portion 101 of the container.

In the embodiment illustrated in figures 1a-b, the molding device 108 also comprises a third removable portion 108c. The first removable portion 108a is configured to enclose the upper portion 102 of the hollow container, and the second 108b and the third 108c removable portions are configured to enclose the main portion 101 of the hollow container.

The term "enclose", in this context means that the removable mold portions surround and contact the hollow container portions such that an evenly grounded and electrically conductive surface is achieved. In embodiments, the respective removable mold portions has a shape that matches the shape of the hollow container portions.

The molding device 108 may e.g. comprise aluminum. The molding device 108 is configured to enclose the hollow container 100 to secure grounding and contact with an electrically conductive surface during polymeric powder deposition.

As illustrated in figure 1a, the main portion 101 and the upper portion 102 of the container are enclosed by the molding device 108 during the polymeric powder deposition step b).

The interior powder coating may be provided by continuously spraying the interior of the hollow container for about 1 to 20, e.g. 2 to 10 seconds. Charged particles are blown from the nozzle 107a towards the interior walls 105a of the container. An even electrical field is achieved by means of the molding device 108 enclosing the main and upper portions of the container. Accordingly, an even and uniform barrier coating covering substantially all parts of the interior walls of the container is achieved.

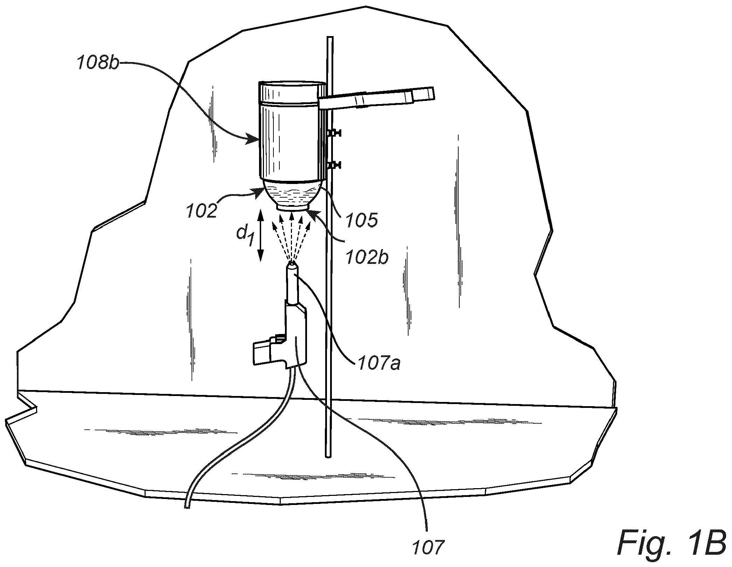

Figure 1b illustrates the step of providing an exterior coating on the exterior surface of the upper portion 102 of the container 100. In this step, the first removable portion 108a is removed from the molding device 108.

The tip of the spraying device 107 is arranged at an axial distance, d1, of from 50 mm to 250 mm, preferably of from 70 mm to 150 mm from the opening of the container. Typically, spraying is achieved by arranging the tip or the nozzle of the spraying device 107 in a vertical position with respect to the center of the opening of the container; i.e. along the longitudinal center line.

The hollow container is preferably a bottle. As illustrated in figure 2, the bottle comprises a bottom surface 104 and sidewalls 105 extending from the bottom surface 104 to an opening 106 of the bottle; the sidewalls 105 defining the main portion 101 and the upper portion 102 of the bottle. The bottle may have a rotational symmetry about the longitudinal center line 103. The bottle typically has a substantially cylindrical shape.

The upper portion 102 comprises a shoulder portion 102a and a neck portion 102b, wherein the neck portion 102b has a smaller cross-sectional area than the main portion 101 and is configured to circumferent at least the opening 106 of the bottle, and wherein the shoulder portion 102a is arranged to taper between the main portion and the neck portion.

The shoulder portion typically tapers at an angle of from about 5 to 75 degrees, e.g. from 20 to 60 degrees between the main portion and the neck portion.

In the embodiment illustrated in figure 2, the neck portion 102b is threaded. A threaded neck portion may be beneficial in various bottle applications, but the present disclosure is not limited to the neck portion being threaded.

The neck portion 102b of the bottle is the portion subject to most moist and liquid. This portion is coated in the step c) of the method. The neck portion has a smaller cross-sectional area than the remaining parts of the upper portion 102 of the bottle.

In embodiments, where the neck portion 102b is threaded, the threaded portion typically has a trapezoidal configuration; i.e. a "screw thread profile" which enables a cap to be screwed thereto.

The main portion 101 and the upper portion 102 (comprising the neck portion and the shoulder portion) of the hollow container are formed integrally.

In the step of providing an exterior coating (step c), at least the neck portion 102b of the upper portion is coated.

After, the steps of polymeric powder deposition b) and c), the hollow container is subject to treatment with heat and/or irradiation under conditions that melt and/or cure the polymeric powder.

When the polymeric powder is exposed to elevated temperatures or to irradiation, e.g. ultraviolet radiation, the deposited polymeric powder coatings soften, melt and/or cure and a continuous barrier coating is provided.

Accordingly, a uniform barrier coating, free from pinholes is achieved.

Depending on the characteristics of the polymeric particles and the desirable thickness of barrier coating, the heat treatment step may vary.

In embodiments, the hollow container is subject to heat treatment at a temperature of from 100°C to 300°C. The heat treatment time may be between 1 and 30 minutes.

Alternatively, the powder coatings may be treated with ultraviolet (UV) light, which typically allows for a fast melting and curing of the powder coating.

In embodiments, the curing step d) is performed by heating the hollow container at a temperature of from 150°C to 200°C, preferably from 170°C to 190°C for 5 to 20 minutes, preferably from 8 to 15 minutes.

The method of the present disclosure allows for coating of *both* the interior surface and the exterior surface prior to heat (or irradiation) treatment. Accordingly, only one curing or melting step is required in the method. This is beneficial since the method is considerably simplified and saves time compared to if e.g. heating would have to be performed after the respective coating steps b) and c).

The step(s) of providing the interior and the exterior coatings in the same spraying sequence(s); i.e. prior to the heating or irradiating the polymeric powder coating may be connected to the moisture content of the hollow container. The hollow container preferably has a moisture content corresponding to conditioning at an ambient relative humidity in the range of from 60 to 100%, preferably from 75 to 95% during the steps of polymeric powder deposition.

As used herein, the term "moisture content corresponding to conditioning at an ambient relative humidity" means that the moisture content of the container has reached the humidity that corresponds to an equilibrium with the surrounding atmosphere at room temperature. The term reflects the amount of moisture contained by the material of the hollow container when it is in equilibrium with that of the surrounding atmosphere and where the container will not gain or lose moisture to the atmosphere.

This feature further allows for coating the exterior surface of the upper container portion, wherein the upper portion is not grounded or arranged in contact with an electrically conductive surface during the polymeric powder deposition.

For example, after step a) of providing a hollow container comprising molded pulp, the method may comprise a step of
- conditioning the hollow container at an ambient relative humidity of from 60 to 100%, e.g. from 75 to 95%.

The conditioning time may be at least 2 hours, e.g. at least 10 hours, preferably at least 15 hours at an ambient relative humidity of from 60 to 100%, e.g. from 75 to 95%. The hollow containers may be conditioned at room temperature.

The polymeric powder deposition step b) is typically performed directly after the step of conditioning to maintain the relative humidity of the hollow container during powder coating.

In embodiments, the molded pulp is formed from a mixture of a first and a second pulp, wherein
- the first pulp comprises 65-90 %, such as 70-84 %, by dry weight of a first pulp having a Schopper- Riegler (SR) number according to ISO 5267-1 of below 48, preferably below 40, more preferably below 30; and
- the second pulp comprises 10-35 %, such as 16-30 %, by dry weight of a second pulp having a Schopper- Riegler (SR) number according to ISO 5267-1 of 60-90, preferably 70-90, more preferably 77-90.

Such a pulp mixture allows for an enhanced strength of the walls of the container and also affects how quickly the pulp can be dewatered in the mold. Accordingly, the step of providing a hollow container can be achieved in a quicker and more robust manner.

The first pulp may be unrefined or only modestly refined.

The second pulp typically has a higher degree of refining than the first pulp. Accordingly, the average fiber length is greater in the first pulp than in the second pulp.

The first and/or the second pulp may comprise "market pulp"; i.e. pulp produced in one location, dried and shipped to another location for further processing.

Preferably, at least 50%, e.g. at least 75%, e.g. at least 90% by dry weight of the first and/or second pulp is softwood pulp. Such pulp mixture allows for stronger container walls to be provided.

The thickness of the coating formed in the coating step b) and/or c) is in the range of from 5 to 200 µm, e.g. from 20 to 100 µm.

In another aspect, there is provided a hollow container, formed according to the method described hereinbefore.

With reference to figure 2, the hollow container comprises a main portion 101 and an upper portion 102; the hollow container extending along a longitudinal center line 103, wherein the longitudinal extension of the upper portion 102 corresponds to 5-30% of the maximum longitudinal extension of the hollow container 100, and wherein the longitudinal extension of the main portion 101 corresponds to 70-95% of the maximum longitudinal extension of the hollow container 100, wherein the hollow container comprises a bottom surface 104 and sidewalls 105 extending from the bottom surface 104 to an opening 106 of the hollow container; the sidewalls 105 and the bottom surface 104 defining an exterior surface and an interior surface 105a of the hollow container, wherein the hollow container comprises a barrier coating comprising polymeric powder on the interior surface 105a of the hollow container and on the exterior surface of at least a portion of the upper portion 102 of the hollow container.

Preferably, the hollow container is a bottle; the upper portion 102 comprising a shoulder portion 102a and a neck portion 102b; wherein the neck portion has a smaller cross-sectional area than the main portion and is configured to circumferent at least the opening 106 of the bottle, and wherein the shoulder portion is arranged to taper between the main portion and the neck portion; wherein the bottle comprises a barrier coating comprising polymeric powder on the interior surface 105a of the bottle and on at least the exterior surface of the neck portion 102b of the bottle.

The exterior surface of the main portion 101 of the bottle preferably does not comprise any barrier coating. Accordingly, the main part of the exterior surface of the bottle will have a paper like appearance with no gloss.

### Examples: Powder coating of interior and exterior surface of the sidewalls of a bottle comprising molded pulp

The aim of the test was to apply a polymer powder coating to the interior surfaces of the bottle and the exterior surfaces of the upper portion; i.e. the neck portion, of the bottle prior to subjecting the coatings to heat treatment.

Three paper bottles were used in the testings. Each bottle comprised a pulp formed from a mixture of chemical and mechanical pulp.

The bottles were mounted in an aluminum molding device, hung upside down as illustrated in figures 1a-b. The aluminium molding device comprised three removable portions. The spray gun used to deposit the powder coatings was a Nordson Encore HD automatic powder coating gun. The polymeric powder used was a HDPE powder with a particle size distribution of 0-80 um.

The spray gun nozzle was inserted in each bottle approximately 10 mm from the bottom surface of the bottle. The spraying sequence lasted for about 5-7 seconds, and was continuous while moving the spray gun out of the bottle.

Thereafter the portion of the molding device covering the upper portion of the bottle was removed, screw holes were covered and the bottles were sprayed once more by holding the spray gun about 100 mm from the bottle opening (see figure 1b). The adherence and coverage of the powder on the outside neck and shoulder of the bottles; i.e. the upper portion of the bottles were reported.

Three different bottles were used in the testings. Two bottles were conditioned at 23°C, 90% RH, overnight, and one bottle was conditioned at 23°C, 50% RH, overnight.

Bottles conditioned at 90% relative humidity (RH) had a very good coverage and the complete upper portion; i.e. neck portion, of the bottle exhibited an even exterior coating. The results are illustrated in figures 3a and 3b. Figure 3a illustrates the exterior coating 103 on the upper portion of the bottle 300. The main portion 101 of the bottle 300 does not have any coating on the exterior walls. Figure 3a illustrates the bottle 300 after curing.

For the bottle cured at 50% RH, very little powder coverage of the exterior surface of the upper portion of the bottle was achieved.

Terms, definitions and embodiments of all aspects of the present disclosure apply mutatis mutandis to the other aspects of the present disclosure.

Even though the present disclosure has been described with reference to specific exemplifying embodiments thereof, many different alterations, modifications and the like will become apparent for those skilled in the art.

Variations to the disclosed embodiments can be understood and effected by the skilled addressee in practicing the present disclosure, from a study of the drawings, the disclosure, and the appended claims. Furthermore, in the claims, the word "comprising" does not exclude other elements or steps, and the indefinite article "a" or "an" does not exclude a plurality.

## Claims

1. A method for providing a barrier coating on a hollow container (100) comprising molded pulp; said method comprising:
a) providing a hollow container (100) comprising molded pulp, wherein said hollow container (100) comprises a main portion (101) and an upper portion (102); said hollow container extending along a longitudinal center line (103), wherein the longitudinal extension of said upper portion (102) corresponds to 5-30% of the maximum longitudinal extension of said hollow container (100), and wherein the longitudinal extension of said main portion (101) corresponds to 70-95% of the maximum longitudinal extension of said hollow container (100), wherein said hollow container comprises a bottom surface (104) and sidewalls (105) extending from said bottom surface (104) to an opening (106) of said hollow container; said sidewalls (105) and said bottom surface (104) defining an exterior surface and an interior surface (105a) of said hollow container;
b) depositing a polymeric powder onto the interior surface (105a) of said hollow container (100) by means of a spraying device (107) capable of charging the polymeric powder prior to or during deposition of said polymeric powder, wherein at least said main portion (101) of said hollow container (100) is grounded during said polymeric powder deposition,
c) depositing a polymeric powder onto the exterior surface of at least a portion of said upper portion (102) of said hollow container (100) by means of said spraying device (107),
d) treating said hollow container with heat or irradiation under conditions that melt and/or cure said polymeric powder after said steps b) and c).

2. The method according to claim 1, wherein said hollow container (100) has a moisture content corresponding to conditioning at an ambient relative humidity of from 60 to 100%, preferably from 75 to 95% during said steps of polymeric powder deposition.

3. The method according to claim 1 or claim 2, wherein said polymeric powder deposition steps b) and c) are performed simultaneously.

4. The method according to claim 1 or claim 2, wherein said polymeric powder deposition step c) is performed by arranging said spraying device (107) at a distance, d1, of from 50 mm to 250 mm, preferably of from 70 mm to 150 mm from said opening (106) of said container.

5. The method according to any one of the preceding claims, wherein said polymeric powder deposition step b) is carried out in a molding device (108) comprising an electrically conductive material, preferably a metal; said molding device (108) comprising at least a first (108a) and a second (108b) removable portion, wherein said first removable portion (108a) is configured to enclose said upper portion (102) of said hollow container (100) and wherein said second removable portion (108b) is configured to enclose said main portion (101) of said hollow container (100).

6. The method according to claim 5, wherein said first removable portion (108a) is removed from said molding device (108) during said polymeric powder deposition step c).

7. The method according to any one of the preceding claims, wherein said hollow container is a bottle, wherein said upper portion (102) comprises a shoulder portion (102a) and a neck portion (102b), wherein said neck portion has a smaller cross-sectional area than said main portion and is configured to circumferent at least said opening (106) of said bottle, and wherein said shoulder portion (102a) is arranged to taper between said main portion (101) and said neck portion (102b).

8. The method according to claim 7, wherein at least said neck portion (102b) of said upper portion (102) is coated in said polymeric powder deposition step c).

9. The method according to claim 7 or claim 8, wherein the entire upper portion (102) of said hollow container (100) is coated in said polymeric powder deposition step c).

10. The method according to any one of the preceding claims, wherein said step d) is performed by heating said hollow container (100) at a temperature of from 150°C to 200°C, preferably from 170°C to 190°C for 5 to 30 minutes, preferably from 8 to 15 minutes.

11. The method according to any one of the preceding claims, wherein the thickness of said coating formed in said coating step b) and/or c) is in the range of from 5 to 200 µm, preferably from 20 to 100 µm.

12. The method according to any one of the preceding claims, wherein said molded pulp is formed from a mixture of a first and a second pulp, wherein
- said first pulp comprises 65-90 %, such as 70-84 %, by dry weight of a first pulp having a Schopper- Riegler (SR) number according to ISO 5267-1 of below 48, preferably below 40, more preferably below 30; and
- said second pulp comprises 10-35 %, such as 16-30 %, by dry weight of a second pulp having a Schopper- Riegler (SR) number according to ISO 5267-1 of 60-90, preferably 70-90, more preferably 77-90.

13. A hollow container (100) formed by the method according to any one of claims 1-12, wherein the hollow container comprises a main portion (101) and an upper portion (102); said hollow container extending along a longitudinal center line (103), wherein the longitudinal extension of said upper portion (102) corresponds to 5-30% of the maximum longitudinal extension of said hollow container (100), and wherein the longitudinal extension of said main portion (101) corresponds to 70-95% of the maximum longitudinal extension of said hollow container (100), wherein said hollow container comprises a bottom surface (104) and sidewalls (105) extending from said bottom surface (104) to an opening (106) of said hollow container; said sidewalls (105) and said bottom surface (104) defining an exterior surface and an interior surface (105a) of said hollow container, wherein said hollow container comprises a barrier coating comprising polymeric powder on said interior surface (105a) of said hollow container and on the exterior surface of at least a portion of said upper portion (102) of said hollow container.

14. A hollow container according to claim 13, wherein said hollow container is a bottle; said upper portion (102) comprising a shoulder portion (102a) and a neck portion (102b), wherein said neck portion has a smaller cross-sectional area than said main portion and is configured to circumferent at least said opening (106) of said bottle, and wherein said shoulder portion is arranged to taper between said main portion and said neck portion, wherein said bottle comprises a barrier coating comprising polymeric powder on the interior surface (105a) of said bottle and on at least the exterior surface of said neck portion (102b) of said bottle.

15. The hollow container according to claim 14, wherein the exterior surface of said main portion (101) of said bottle does not comprise any barrier coating.
